# EUROPEAN PATENT APPLICATION

(11) **EP 4 438 386 A1**
(43) Date of publication of application: **02.10.2024**
(21) Application number: 23165144.9
(22) Date of filing: 29.03.2023
(51) Int. Cl.: B60L 50/40, B60L 7/18, B60L 50/30, B60L 1/00, B60W 20/14, B60W 20/40, B60W 30/18, B60K 6/28, B60K 6/387, B60K 6/48, B60K 6/10, B60L 15/20, B60L 50/15, B60L 50/16, B60L 58/13, B60L 58/15, B60L 58/20

(54) **KINETIC ENERGY RECOVERY SYSTEM**

(71) Applicant: VOLVO TRUCK CORPORATION, 405 08 Göteborg (SE)
(72) Inventor: CHAVRIER, Philemon, 69008 LYON (FR); POUSSIN, Olivier, 69008 LYON (FR); MAZAUFROY, Cedric, 01700 MIRIBEL (FR); PESENTI, Sebastien, 69800 ST PRIEST (FR)
(74) Representative: Ström & Gulliksson AB

(57) **Abstract**

An energy recovery system (**100**) for a vehicle is presented. The energy recovery system (**100**) comprises a Kinetic Energy Recovery System, KERS, (**110**) for connecting to a propulsion shaft (**14**) of the vehicle, an internal energy storage device (**130**) configured to receive and store energy from the KERS (**110**), and a processing circuitry (**120**) configured to cause distribution of energy (E) from the internal energy storage device (**130**) to the propulsion shaft (**14**) of the vehicle (**10**) and/or at least one non-propulsion battery (**17**) for the vehicle based on an energy level of the non-propulsion battery (**17**).

## Description

### TECHNICAL FIELD

The disclosure relates generally to an energy recovery system. In particular aspects, the disclosure relates to a kinetic energy recovery system for a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The development of modern vehicles is fast, and energy efficiency, safety and comfort are just a few areas where continuous improvements are made.

With increasing awareness of the impact of fossil fuels on the environment, modern vehicles are under pressure to reduce emissions and become more fuel-efficient. This has led to the development of electric and hybrid vehicles, as well as more efficient combustion engines. While modern vehicles are generally safer than older models, there are still challenges in ensuring that they are as safe as possible. This includes improving crash test performance, developing better driver assistance technologies, and reducing the risk of accidents caused by distracted driving. Modern vehicles are much more complex than older models, with more advanced electronic systems, sensors, and computer control units. This complexity increases a demand on power sources and power reliability of the vehicle. Modern vehicles are often more expensive than older models, due to the increased complexity and advanced technology involved. This may make it difficult for some people to afford a new vehicle, and may also lead to higher repair costs for those who do purchase a new vehicle.

Based on the above, there is a need for improvements.

### SUMMARY

According to a first aspect of the disclosure, an energy recovery system for a vehicle is presented. The energy recovery system comprises a Kinetic Energy Recovery System, KERS, for connecting to a propulsion shaft of the vehicle, an internal energy storage device configured to receive and store energy from the KERS, and a processing circuitry configured to cause distribution of energy from the internal energy storage device to the propulsion shaft of the vehicle and/or at least one non-propulsion battery for the vehicle based on an energy level of the non-propulsion battery. The first aspect of the disclosure may seek to provide a system that enables an alternative to charging a non-propulsion battery with a generator or alternator. A technical benefit may include reducing cost, weight and maintenance of the vehicle.

In some examples, including in at least one preferred example, optionally, the processing circuitry is further configured to cause distribution of energy from the internal energy storage device based on an acceleration indicator obtained from the vehicle.

In some examples, including in at least one preferred example, optionally, the processing circuitry is configured to prevent distribution of energy from the internal energy storage device to the propulsion shaft of the vehicle responsive to the acceleration indicator indicating a negative acceleration of the vehicle.

In some examples, including in at least one preferred example, optionally, the internal energy storage device is a super capacitor.

In some examples, including in at least one preferred example, optionally, the processing circuitry is further configured to cause distribution of energy from the internal energy storage device to the non-propulsion battery and to prevent distribution of energy from the internal energy storage device to the propulsion shaft of the vehicle responsive to the energy level of the non-propulsion battery being below a first threshold.

In some examples, including in at least one preferred example, optionally, the processing circuitry is further configured to cause distribution of energy from the internal energy storage device to the propulsion shaft of the vehicle responsive to the energy level of the non-propulsion battery being above the first threshold.

In some examples, including in at least one preferred example, optionally, the processing circuitry is further configured to cause distribution of energy from the internal energy storage device to the propulsion shaft of the vehicle and to prevent distribution of energy from the internal energy storage device to the non-propulsion battery responsive to the energy level of the non-propulsion battery being above a second threshold, wherein the second threshold is indicating a higher energy level than the first threshold.

In some examples, including in at least one preferred example, optionally, preferably the processing circuitry is further configured to cause distribution of energy from the internal energy storage device to the non-propulsion battery and to the propulsion shaft of the vehicle responsive to the energy level of the non-propulsion battery being between the first and second thresholds.

In some examples, including in at least one preferred example, optionally, the processing circuitry is further configured to provide a recuperation indication to the vehicle indicating that the vehicle is to operate at an enforced energy recuperation mode.

In some examples, including in at least one preferred example, optionally, the processing circuitry is configured to provide the recuperation indication to the vehicle responsive to the energy level of the non-propulsion battery being below a minimum threshold, wherein the minimum threshold is below the first threshold.

In some examples, including in at least one preferred example, optionally, the energy recovery system further comprises the at least one non-propulsion battery.

In some examples, including in at least one preferred example, optionally, the energy recovery system further comprises at least two non-propulsion batteries.

In some examples, including in at least one preferred example, optionally, a first non-propulsion battery is configured for providing power to vehicle propulsion support functions and a second non-propulsion battery is configured for providing power to vehicle comfort control.

In some examples, including in at least one preferred example, optionally, at least one non-propulsion battery is a battery configured with a nominal voltage below 30 V.

In some examples, including in at least one preferred example, optionally, the KERS comprises an electrical motor.

In some examples, including in at least one preferred example, optionally, the KERS comprises a flywheel arrangement.

According to a second aspect, a vehicle is presented. The vehicle comprises a non-propulsion battery for providing power to the vehicle, a propulsion shaft, a propulsion source coupled to the propulsion shaft, and an energy recovery system of the first aspect connected to the propulsion shaft.

In some examples, including in at least one preferred example, optionally, the propulsion source is selectively connected to the propulsion shaft.

In some examples, including in at least one preferred example, optionally, a controllable disconnect is provided between the propulsion source and the propulsion shaft. The KERS is connected to the propulsion shaft downstream from the propulsion source and the controllable disconnect.

In some examples, including in at least one preferred example, optionally, the vehicle further comprises a vehicle processing circuitry configured to cause the controllable disconnect to disconnect the propulsion source from the propulsion shaft responsive to obtaining a recuperation indication indicating that the vehicle is to operate at an enforced energy recuperation mode.

According to a third aspect, a method is presented. The method is a method of distributing energy of an internal energy storage device of an energy recovery system according to the first aspect when comprised in a vehicle. The method comprises obtaining an energy level of a non-propulsion battery connected to the energy recovery system. The method further comprises distributing energy from the internal energy storage device to a propulsion shaft of the vehicle and/or to the non-propulsion battery based on the energy level of the non-propulsion battery.

In some examples, including in at least one preferred example, optionally, distributing energy from the internal energy storage device comprises distributing energy from the internal energy storage device to the non-propulsion battery and to prevent distribution of energy from the internal energy storage device to the propulsion shaft of the vehicle responsive to the energy level of the non-propulsion battery being below a first threshold.

In some examples, including in at least one preferred example, optionally, distributing energy from the internal energy storage device further comprises distributing energy from the internal energy storage device to the propulsion shaft of the vehicle responsive to the energy level of the non-propulsion battery being above the first threshold.

In some examples, including in at least one preferred example, optionally, the method further comprises, responsive to the energy level of the non-propulsion battery being above a second threshold indicating a higher energy level than the first threshold, distributing energy from the internal energy storage device to the propulsion shaft of the vehicle, and preventing distribution of energy from the internal energy storage device to the propulsion shaft of the vehicle.

In some examples, including in at least one preferred example, optionally, distributing energy from the internal energy storage device further comprises distributing energy from the internal energy storage device to the non-propulsion battery and to the propulsion shaft of the vehicle responsive to the energy level of the non-propulsion battery being between the first and second thresholds.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is a side view of an exemplary vehicle according to an example.
**FIG. 2** is a partial schematic view of an exemplary vehicle according to an example.
**FIG. 3** is a schematic view of an energy recovery system according to an example.
**FIG. 4** is a schematic view of an energy recovery system according to an example.
**FIG. 5** is a graph of energy level of a non-propulsion battery according to an example.
**FIG. 6** is a schematic view of a method of distributing energy of an internal energy storage device according to an example.
**FIG. 7** is a partial schematic view of a method of distributing energy of an internal energy storage device according to an example.
**FIG. 8** is a flow chart of distributing energy of an internal energy storage device according to an example.
**FIG. 9** is a schematic diagram of an exemplary computer system for implementing examples disclosed herein, according to one example.

### DETAILED DESCRIPTION

The detailed description set forth below provides information and examples of the disclosed technology with sufficient detail to enable those skilled in the art to practice the disclosure.

Modern vehicles generally utilize a significant number of electrically powered devices. Fuel injection systems and monitoring systems of a vehicle run on electricity and require electrical power to function. These systems may be powered by a first electrical power source of the vehicle, a first battery. The first battery may be referred to as a vehicle management battery, a motor control battery, or an engine control battery. The first battery is configured to provide power to vehicle propulsion support functions. Some vehicles have elaborate comfort systems with not only temperature control but also refrigerators, microwave ovens etc., all powered by electricity. These systems may be powered by a second electrical power source of the vehicle, a second battery. The second battery may be referred to as a service battery, a living battery or a driver comfort battery. These power sources are generally different from a power source that is utilized to propel the vehicle and are referred to as non-propulsion batteries within the present disclosure.

In order to ensure that these non-propulsion batteries are powered, or least the first power source which is required to operate the vehicle, a generator (alternator) is generally provided to provide energy to the non-propulsion batteries. A generator in a vehicle is generally considered an important, or even essential, component of an electrical system of the vehicle. However, a generator adds weight and complexity to a vehicle's engine, may can reduce fuel efficiency and increase maintenance costs. A generator relies on the engine to produce power, which can lead to increased wear and tear on the engine. Generators may produce noise and vibration, which may be uncomfortable for passengers and may also indicate potential mechanical problems. Production and recycling of generators produce emissions and contribute to the overall carbon footprint of a vehicle.

The inventors behind the present disclosure have identified the shortcomings and drawbacks of the generator and endeavored to provide alternatives to this.

As previously indicated, energy efficiency of modern vehicles is an important area of improvement. Some vehicles incorporate a Kinetic Energy Recovery System (KERS) in order to preserve momentum and reduce fuel and/or energy consumption of a vehicle. A KERS is a mechanism that recovers the kinetic energy that is typically lost during braking of a vehicle. The KERS converts the recovered energy into a form that can be used to power the vehicle. KERS is may be used in any kind of vehicles, hybrid electric vehicles (HEVs), Formula One (F1) race cars and heavy-duty equipment have been known to incorporate KERS in their drivelines.

The KERS system in a vehicle generally comprises several components, such as an electric motor/generator, a battery pack, and a control unit. When an operator of the vehicle applies brakes of the vehicle, the kinetic energy of the vehicle is converted into electrical energy by the motor/generator, which is then stored in the battery pack. When the driver accelerates, the KERS system may use the stored electrical energy to provide a boost of power to the engine, which increases the overall performance and efficiency of the vehicle.

In F 1 race cars, KERS is used to provide a short burst of extra power during overtaking maneuvers, which can make a significant difference in the outcome of a race. In REVs and heavy-duty vehicles, KERS may help to improve fuel efficiency by reducing the load on an engine of the vehicle and by providing additional power during acceleration.

Overall, a KERS system is an effective way to improve the efficiency and performance of a vehicle by recovering the kinetic energy that is typically lost during braking and using it to provide a boost of power during acceleration.

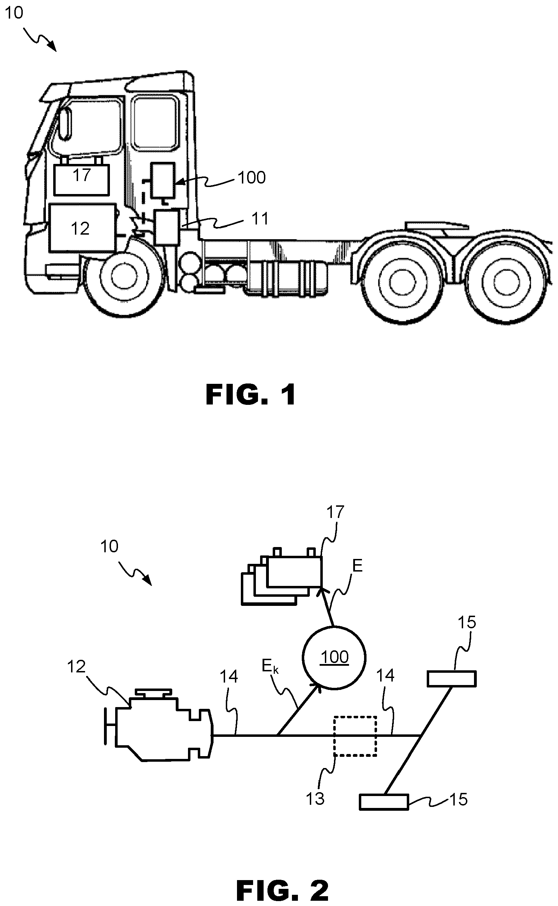

In **FIG. 1****,** a vehicle **10** in the form of a truck is shown. The vehicle **10** is an exemplary view of a vehicle **10,** and the skilled person will appreciate that the teachings of the present disclosure may be applied to any suitable vehicle **10** and not only the truck of **FIG. 1**.

The vehicle **10** comprises an energy recovery system **100** configured to recover kinetic energy of the vehicle **10**. The vehicle **10** further comprises a propulsion source **12** that may be a combustion engine, an electrical motor or a combination thereof. The vehicle **10** advantageously comprises a vehicle processing circuitry **11** configured control or cause control of at least some operation of the vehicle **10**. The vehicle processing circuitry **11** is advantageously operatively connected to at least the energy recovery system **100**. The vehicle **10** further comprises at least one non-propulsion battery **17**. The non-propulsion battery **17** is configured to provide power to any system and device of the vehicle **10** except the propulsion source **12**. If the propulsion source **12** is a combustion engine, the combustion engine will be powered by fuel and the non-propulsion battery **17** may be configured to power e.g. circuitry, systems and/or devices controlling the combustion engine and/or comfort systems of the vehicle. If the propulsion source **12** is an electrical motor, the electric motor will be powered by a propulsion battery of the vehicle **10**. The non-propulsion battery **17** may be configured to power e.g. circuitry, systems and/or devices controlling the electric motor and/or comfort systems of the vehicle.

The propulsion battery is generally a battery having a significantly higher nominal voltage than the non-propulsion battery. Generally, a propulsion battery may have a nominal voltage of a few hundred volts while the non-propulsion battery 17 is generally configured with a nominal voltage below 50V, preferably below 30 V. Generally, a truck is provided with non-propulsion batteries having a nominal voltage of 24 V, or rather, the truck may be provided with one or more pairs of non-propulsion batteries having a nominal voltage of 12 V connected in series. A general car may be provided with a non-propulsion battery having a nominal voltage of 12 V.

In **FIG. 2**, a schematic view of the arrangement of some of the components of the vehicle **10** is shown. The skilled person will appreciate the schematic view of **FIG. 2** is, for efficiency of disclosure, simplified and focus on the features that are most relevant to the present disclosure. In **FIG. 2**, the vehicle **10** comprises the energy recovery system **100** which will be further explained in later sections of the present disclosure. The vehicle **10** further comprises one or more non-propulsion batteries **17**. The non-propulsion batteries **17** may be any suitable non-propulsion battery **17** described herein. The vehicle **10** further comprises a propulsion source **12**, in **FIG. 2** shown as a combustion engine, but as previously indicated, any suitable propulsion source **12** may be utilized with the teachings of the present disclosure. The propulsion source **12** is propelling a propulsion shaft **14** of the vehicle **10**. The propulsion shaft transfers the propelling from the propulsion source **12** to wheels **15** of the vehicle **10**. It should be mentioned that also belt drives may be utilized with the teachings of the present disclosure. The energy recovery system **100** is configured to obtain energy **Eₖ** from the propulsion shaft **14**. The energy from the propulsion shaft **14** is kinetic energy **Eₖ**. The energy recovery system **100** is configured to convert the kinetic energy **Eₖ** from the propulsion shaft **14** to electrical energy **E** and provide the electrical energy **E** to the non-propulsion battery **17**.

By the arrangement of the vehicle **10** illustrated in FIG. 10, the energy recovery system **100** may charge the non-propulsion battery **17** and replace a generator of the vehicle **10**. As mentioned above, this provides significant benefits for the vehicle **10** with regards to e.g., cost, quality and fuel efficiency (reduced weight).

In **FIG. 2**, an optional disconnect **13** is provided in serial to the propulsion shaft **14**. The disconnect **13** may be a clutch or other suitable disconnect device arranged to disconnect the propulsion source **12** from the wheels **15**. That is to say, the propulsion source **12** may be selectively connected to the propulsion shaft **14** of the vehicle **10**. As will be explained in later sections, the disconnect **13** may be utilized to force kinetic energy **Eₖ** to be provided to the energy recovery system **100** without propelling the vehicle **10**. The disconnect **13** is advantageously controlled by the vehicle control circuit **11**.

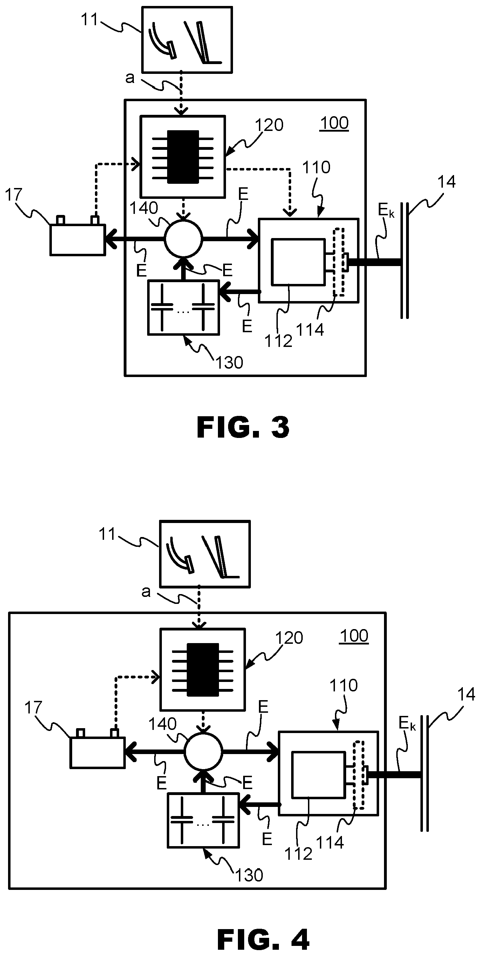

In **FIG. 3**, a schematic view of an energy recovery system **100** according to some examples of the present disclosure is shown. The energy recovery system **100** comprises a KERS **110** configured to be connected to the propulsion shaft **14** of the vehicle **10**. That is to say, the KERS **110** is arranged to obtain kinetic energy **Eₖ** to the propulsion shaft **14** and to provide kinetic energy **Eₖ** to the propulsion shaft **14** depending on a mode of operation of the energy recovery system **100**.

The KERS comprises an electrical motor **112** arranged to (i.e. configured to, adapted to) convert kinetic energy **Eₖ** from the propulsion shaft **14** to electric energy **E** and to convert electric energy to kinetic energy **Eₖ** for the propulsion shaft **14** depending on a mode of operation of the KERS **110**.

The KERS may in some examples comprise a flywheel arrangement **114** considered to store kinetic energy **Eₖ** as kinetic energy **Eₖ**. Adding a flywheel arrangement **114** to a KERS **110** in a vehicle **10** may provide several benefits, including improved performance, fuel efficiency, and reduced emissions. The flywheel arrangement **114** is able to store a comparable large amount of energy in a comparable small volume, making it an efficient and practical option for the KERS **110**. The stored energy may be quickly released when needed, providing a burst of power to the vehicle **10**. The flywheel **114** arrangement may very well be combined with other examples and/or features presented herein. Kinetic energy **Eₖ** of the flywheel **110** may be converted to electric energy **E** and provided to the energy storage device **130**.

The energy recovery system **100** of **FIG. 3** further comprises a processing circuitry **120**. The processing circuitry **120** is configured to control operation of the KERS **110** and the energy recovery system **100**.

In **FIG. 3**, the energy recovery system **100** further comprises an energy storage device **130**. The energy storage device **130** is an electrical energy storage device and is arranged to store energy recovered by the KERS **110**. The kinetic energy **Eₖ** recovered by the KERS **110** is converted to electrical energy **E** by the electrical motor **112** of the KERS **110** and provided to the energy storage device **130** for later use.

The energy storage device **130** may be any energy storage device **130** suitable for storing electrical energy. The energy storage device **130** may be any suitable energy storage device such as a capacitor or a battery. A rechargeable battery provide energy storage in a chemical form and may be recharged many times. Different types of batteries include lead-acid, nickel-cadmium, nickel-metal hydride, and lithium-ion batteries which are all well known to the skilled person. In an advantageous example, the energy storage device **130** comprises one more super capacitors. Super capacitors, also known as ultracapacitors, are energy storage devices **130** that are able to store and release electrical energy **E** comparably quickly and efficiently. Super capacitors are configured to deliver high power densities, which means that super capacitors may provide a large amount of power in a short amount of time. This makes them ideal for applications that require a burst of energy, such as electric vehicles, hybrid electric vehicles, and industrial equipment. The speed of energy delivery is mimicked in energy reception of super capacitors. Super capacitors can charge and discharge quickly, which means they can store and release energy much faster than traditional batteries. This makes them useful for applications that require rapid energy transfer, such as the present energy recovery system **100**. Further to this, super capacitors have an extended cycle life, which means that they may be charged and discharged many times without degradation of their performance. Super capacitors do not require periodic deep cycling or equalization, and they have a lower risk of leakage or other issues compared to batteries. Additionally, super capacitors may operate over an extended temperature range, which makes them suitable also for use in extreme environments.

In some examples, the energy storage device **130** stores energy in a non-electric form. In the following, some examples are presented and the skilled person will appreciate that the energy storage device **130** further comprises energy conversion circuitry configured to convert the stored energy into electric energy **E**. In one example, the energy storage device **130** stores energy in the form of kinetic energy **Eₖ**. This may be provided by incorporating a flywheel in the energy storage device **130**. In one example, the energy storage device **130** stores energy by increasing a pressure of a container. This may be provided by incorporating a Compressed air energy storage (CAES) in the energy storage device **130**.

The energy recovery system **100** may further comprise a power control circuitry **140**. The power control circuitry **140** is an electric circuit configured to control the power of the energy recovery system **100**. It may be that a voltage level provided by the KERS **110** to the energy storage device **130** differs from a voltage level of the non-propulsion battery **17**. In such examples, the power control circuitry may comprise a voltage converter such as a DC to DC converter. The power control circuitry **140** may comprise charging circuitry configured to provide suitable charging currents for the non-propulsion battery **17.** The power control circuitry **140** may comprise motor control circuitry configured to drive the electrical motor **112** of the KERS **110**. The power control circuitry **140** may further, or alternatively, comprise suitable switches, relays, sensors and/or safety devices for ensuring that the flow of energy **E** in the energy recovery system **100** is accurate, reliable and safe.

In some examples, the power control circuitry **140** may comprise the processing circuitry **120**, or the processing circuitry **120** may comprise the power control circuit **140.**

In **FIG. 4**, an alternative example of the energy recovery system **100** is shown. The example of **FIG. 4** differs from the example of **FIG. 3** in that the energy recovery system **100** of **FIG. 4** comprises one or more non-propulsion batteries **17**.

The energy recovery system **100** is configured to provide energy **E** to the non-propulsion battery **17** of the vehicle **10** or of the energy recovery system **100**. The processing circuitry **120** is configured to cause control of distribution of energy **E** from the energy storage device **130**. As indicated above, the energy **E** of the energy storage device **130** may provide energy **E** to the non-propulsion battery **17** of the vehicle **10**, i.e. charge the non-propulsion battery and/or to the propulsion shaft **14** of the vehicle, i,e, to the KERS **110** for conversion to kinetic energy **Eₖ** provided to the propulsion shaft **14**.

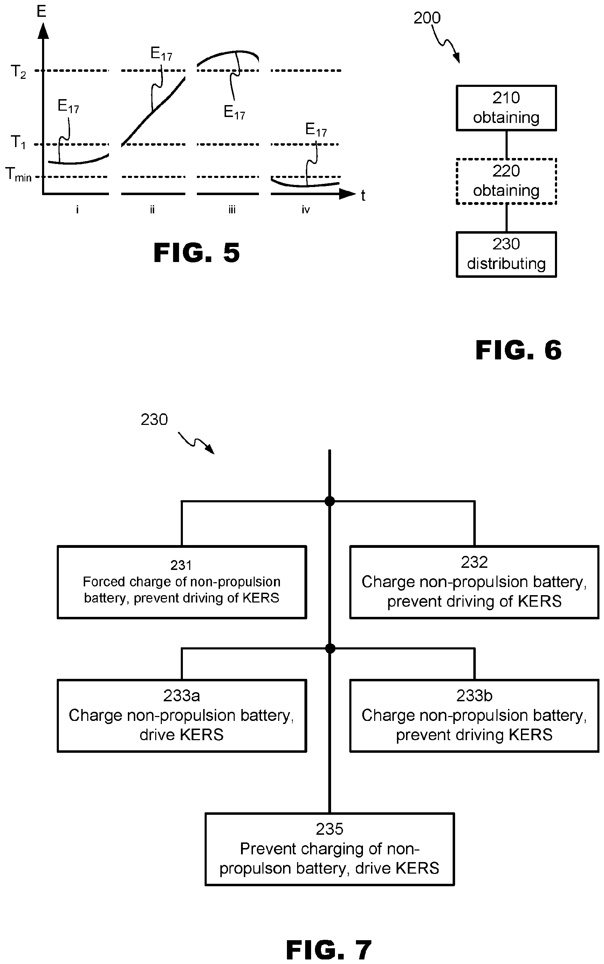

As will be explained in greater detail in the following, the distribution of energy **E** may be based on one or more indicators, values or controls obtained by the energy recovery system **100**. One such parameter is an energy level **E₁₇** (see **FIG. 5**) of the non-propulsion battery **17**.

In **FIG. 5**, a graph of an energy level **E₁₇** of the non-propulsion battery **17** is shown. It should be mentioned that, when the energy level **E₁₇** of the non-propulsion battery **17** is referenced, this does not, as the skilled person will appreciate, necessarily relate to a specific energy level, but may advantageously relate to in indication of a relative or specific energy level. The energy level **E₁₇** may be a percentage indicating a state of charge (SOC), a current voltage level in relation to minimum and maximum voltage levels of the non-propulsion battery **17**.

A common way to measure the SOC or energy level of a battery is by measuring its voltage. As the battery discharges, the voltage drops. So, by measuring the voltage, the SOC of the battery may be estimated. However, the relationship between voltage and state of charge is not linear, and it may, as the skilled person knows, vary depending on the type of battery and the load it is powering. The energy level may be estimated by the specific gravity of an electrolyte of the non-propulsion battery **17**. The specific gravity is a measure of the density of a liquid. In lead-acid batteries which are a common type of non-propulsion batteries **17** for vehicles, the electrolyte's specific gravity changes as the battery charges and discharges. A hydrometer may be used to measure the specific gravity of the electrolyte, and this may be used to determine the energy level of the battery. The energy level **E₁₇** of the non-propulsion battery **17** may be estimated by monitoring an amount of charge that flows into or out of the non-propulsion battery **17**. This may be referred to as coulomb counting. By keeping track of the amount of charge that has been added or removed from the non-propulsion battery **17**, the energy level **E₁₇** of the non-propulsion battery **17** may be estimated. The energy level **E₁₇** of the non-propulsion battery **17** may be estimated by determining an impedance of the non-propulsion battery **17**. As a battery discharges, its impedance changes, and the energy level **E₁₇** of the non-propulsion battery **17** may be estimated. The above listed methods of determining the energy level **E₁₇** of the non-propulsion battery **17** are exemplary and other suitable methods or devices may very well be employed. In order to increase an accuracy of the measured/estimated/determined energy level **E₁₇** of the non-propulsion battery **17**, a combination of methods may be employed.

In **FIG. 5**, the energy level **E₁₇** of the non-propulsion battery **17** is varying over time t. The energy level **E₁₇** of the non-propulsion battery **17** is obtained by the processing circuitry **120** of the energy recovery system **100.** The processing circuitry **120** is configured to control operation of the energy recovery system **100** based on the energy level **E₁₇** of the non-propulsion battery **17.** The energy level **E₁₇** of the non-propulsion battery **17** will determine which region of operation **(i), (ii), (iii), (iv)** the energy recovery system will operate at. In **FIG. 5****,** four main regions of operation **(i), (ii), (iii), (iv)** are shown.

The energy recovery system **100** is configured to operate at a first region of operation **(i)** responsive to the energy level **E₁₇** of the non-propulsion battery **17** being below a first threshold **T₁** and above a minimum threshold **Tₘᵢₙ.** The first region **(i)** is the leftmost region in **FIG. 5**. The first region of operation **(i)** may advantageously indicate that the energy level **E₁₇** of the non-propulsion battery **17** is such that the non-propulsion battery **17** has sufficient energy to reliably manage to provide power to e.g. engine control functionality or other functionality required to propel the vehicle **10**. At the first region of operation **(i)**, the energy **E** from the energy storage device **130** is provided to the non-propulsion battery **17** in order to increase the energy level **E₁₇** of the non-propulsion battery **17**. This means that the energy **E** recovered by the KERS **110** is utilized to charge to the non-propulsion battery **17**. At the first region of operation **(i)**, no energy **E** is provided to the KERS **110** even if the operator of the vehicle **10** accelerates the vehicle **10**. The first region of operation **(i)** reduces a risk that the non-propulsion battery **17** is discharged below the minimum threshold **Tₘᵢₙ**. If the energy level **E₁₇** of the non-propulsion battery **17** falls below the minimum threshold **Tₘᵢₙ**, the non-propulsion battery may not be able to reliably provide power to e.g. engine control functionality or other functionality required to propel the vehicle **10**.

The energy recovery system **100** is configured to operate at a second region of operation **(ii)** responsive to the energy level **E₁₇** of the non-propulsion battery **17** being below a second threshold **T₂** and above the first threshold **T₁**. The second region **(ii)** is the second leftmost region in **FIG. 5**. The second region of operation **(ii)** may advantageously indicate that the energy level **E₁₇** of the non-propulsion battery **17** is such that the non-propulsion battery **17** has sufficient energy, with margin, to reliably manage to provide power to e.g. engine control functionality or other functionality required to propel the vehicle **10**. At the second region of operation **(ii)** it is not critical to charge the non-propulsion battery **17**. However, the non-propulsion battery **17** is not fully charged and it is advantageous to charge the non-propulsion battery **17** at least partly at the second region of operation **(ii)**. To this end, at the second region of operation **(ii)**, the energy recovery system **100** is configured to provide a portion of the energy **E** from the energy storage device **130** to the non-propulsion battery **17** to charge the non-propulsion battery **17**. The energy recovery system **100** is further configured to provide a portion of the energy **E** from the energy storage device **130** to the KERS **110** to provide kinetic energy **Eₖ** to the propulsion shaft **14** (when requested).

At the second region of operation **(ii)**, the sharing of energy **E** between the non-propulsion battery **17** and the KERS **110** may be in equal parts, i.e. 50 % to the non-propulsion battery **17** and 50 % to the KERS **110**. In some examples, the split is in favor of the KERS **110** such that a portion of the energy **E** provided to the KERS **110** is greater than a portion of energy **E** provided to the non-propulsion battery **17**. Advantageously, 40 % of the energy of the energy storage device **130** is provided to the non-propulsion battery **17** and 60 % of the energy of the energy storage device **130** is provided to the KERS **11**.

The energy recovery system **100** is configured to operate at a third region of operation **(iii)** responsive to the energy level **E₁₇** of the non-propulsion battery **17** being above the second threshold **T₂**. The third region **(ii)** is the second rightmost region in **FIG. 5**. The third region of operation **(iii)** may advantageously indicate that the energy level **E₁₇** of the non-propulsion battery **17** is such that the non-propulsion battery **17** is fully, or close to fully charged. At the third region of operation **(iii)**, the non-propulsion battery **17** may not be capable of further charging (trickle charging or maintenance charging excluded). To this end, at the third region of operation **(iii)**, the energy recovery system **100** is configured to provide the energy **E** from the energy storage device **130** to the KERS **110** to provide kinetic energy **Eₖ** to the propulsion shaft **14** (when requested).

With the first three regions of operation **(i)**, **(ii)**, **(iii)** explained, it may be concluded that, at the first region of operation **(i)**, 100 % of the recovered energy **E** of the energy storage device **130** is provide to the non-propulsion battery **17**. Further, at the third region of operation **(iii)**, 100 % of the recovered energy **E** of the energy storage device **130** is provide to the KERS **110**. In some examples, at the second region of operation **(ii)**, the split in distribution of energy **E** is sliding from substantially 100 % in favor of the non-propulsion battery **17** at the first threshold **T₁**, to substantially 100 % in favor of the KERS **110** at the second threshold **T₂**. A sliding split of energy **E** provided to the non-propulsion battery **17** and the KERS **110** is advantageous as a risk of energy spikes (i.e. current spikes) due to switching between the regions of operation is reduced.

It may be that, due to self-discharge, malfunction, elevated power consumption at idle etc., the energy level **E₁₇** of the non-propulsion battery **17** is below the minimum threshold **Tₘᵢₙ**. At this low energy level **E₁₇** of the non-propulsion battery **17** the energy recovery system **100** is configured to operate at a fourth region of operation **(iv)**. This is indicated by the rightmost region in **FIG. 5**. At the fourth region of operation **(iv)**, the energy recovery system **100** is configured to prohibit energy **E** to be transferred to the KERS **110**. Further, at the fourth region of operation **(iv)**, in prohibit the vehicle **10** to be propelled (i.e. driven), the energy recovery system **100** may be configured to alert the vehicle **10**, or an operator of the vehicle **10**, that operation of the vehicle **10** is prohibited at least until the energy level **E₁₇** of the non-propulsion battery **17** is above the minimum threshold **Tₘᵢₙ**. To this end, the energy recovery system **100** may be configured to provide a recuperation indication to the vehicle **10**. Responsive to obtaining the recuperation indication, the vehicle **10** may be configured to e.g., activate the disconnect **13** such that the propulsion source **12** may provide kinetic energy **Eₖ** to the KERS **110**. The KERS **110** will recuperate the kinetic energy **Eₖ** and provide electric energy **E** to the energy storage device **130**. The energy of the energy storage device **130** is then distributed to the non-propulsion battery **17** by the control circuit **120**.

The above fourth region of operation **(iv)** ensures that the non-propulsion battery **17** may be charged even if the vehicle **10** is not moving. This reduces a risk that the vehicle **10** is operated at times when the non-propulsion battery **17** is at a too low energy level. If the vehicle is operated when the non-propulsion battery **17** is at a too energy level, this may result in malfunction of control electronics of the vehicle **10** leading to increased fuel consumption due to improper ignition and/or injection control which may damage the vehicle **10** or reduce road safety of the vehicle **10**.

As will be further explained in later sections of the present disclosure, the distribution of energy **E** from the energy storage device **130** may depend on further indicators. One exemplary indicator is an acceleration indicator **a**, see **FIG. 3** and **FIG. 4**. The acceleration indicator **a** may be obtained from controls **11**, see **FIG. 3** and **FIG. 4**, of the vehicle **10**, e.g. an accelerator, a brake pedal, a cruise control etc. The acceleration indicator a is advantageously configured to indicate a wanted acceleration of the vehicle **10**. To exemplify, if the acceleration indicator **a** is positive, more kinetic energy **Eₖ** is requested for the propulsion shaft **14** of the vehicle **10**. If the acceleration indicator **a** is positive, the energy recovery system **100** may be configured to, if operating at the second or third region of operation **(ii)**, **(iii)** distribute energy **E** to the KERS **110**. However, if the acceleration indicator **a** is negative, the kinetic energy **Eₖ** of the propulsion shaft **14** is to be reduced. In this case, energy is provided form the KERS **110** to the energy storage device and the energy recovery system **100** is prevented from distributing energy **E** to the KERS **110** regardless of the region of operation **(i)**, **(ii)**, **(iii)**, **(iv)** the energy recovery system **100** is operating at.

In **FIG. 6**, a block diagram of a method **200** of distributing energy **E** is shown. The method **200** is suitable for implementation in a vehicle **10** for distributing energy **E** stored in the energy storage device **130** as previously presented. The method **200** will be briefly described, but it should be emphasized that the method **200** may very well be extended to further comprise any suitable features or examples presented herein. Execution of the method **200** is advantageously caused or performed by the processing circuitry **120** of the energy recovery system **100** presented herein. However, execution of the method **200** may be performed or caused by any suitable processing circuitry or collection/distribution of processing circuitry and is not limited to execution by the processing circuitry **120** of the energy recovery system **100**.

The method **200** comprises obtaining **210** an energy level E**17** of a non-propulsion battery **17**. The non-propulsion battery **17** is advantageously a non-propulsion battery **17** as presented in the present disclosure, but may be any suitable non-propulsion battery **17**. The non-propulsion battery is directly or operatively connected to an energy recovery system **100**, as presented herein.

The method **200** further comprises distributing **230** energy **E** from the energy storage device **130** to a propulsion shaft **14** of the vehicle **10** and/or to the non-propulsion battery **17** of the vehicle **10**. The distributing **230** of energy **E** is, as previously presented, based on the energy level **E₁₇** of the non-propulsion battery **17**.

Optionally, in some examples, the method **200** further comprises obtaining **220** the previously presented acceleration indicator **a** from the vehicle **10**. In such examples, the distributing of energy **230** is advantageously further based on the acceleration indicator **a**.

In **FIG. 7**, a detailed view of the distributing of energy **230** is shown. The distributing of energy **230** may optionally comprise preventing **233**b distribution of energy **E** from the internal energy storage device **130** to the propulsion shaft **14** of the vehicle **10** if the acceleration indicator **a** indicates a negative acceleration of the vehicle **10**. If the acceleration indicator **a** indicates a positive acceleration of the vehicle **10**, the distributing of energy **230** may optionally comprise driving **233a**, **235** the KERS **110**.

As further shown in **FIG. 7**, the distributing **230** of energy **E** may optionally comprise distributing **231, 232** energy **E** from the internal energy storage device **130** to the non-propulsion battery **17** and to prevent distribution of energy **E** from the internal energy storage device **130** to the propulsion shaft **14** of the vehicle **10**. As indicated with reference to **FIG. 5**, this is advantageously the case when the energy level **E₁₇** of the non-propulsion battery **17** is below a first threshold **T₁**. That is to say, then the energy recovery system **100** is operating at the first or second region of operation **(i)**, **(ii)**.

In **FIG. 7****,** the distributing **230** of energy **E** may optionally comprise distributing **233**a, **233**b energy **E** from the internal energy storage device **130** to the non-propulsion battery **17** and to, depending on e.g., the acceleration indicator **a**, drive the KERS **110**.

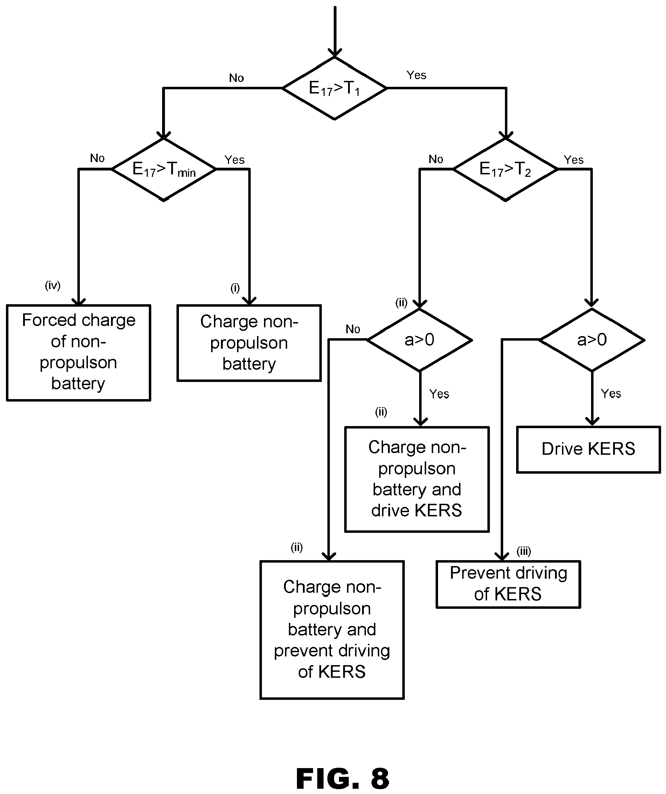

The method **200** will be further explained by the flow chart of **FIG. 8****.** The flow chart of **FIG. 8** shows an exemplary operation of the energy recovery system **100.** Execution of the actions of the flow chart in **FIG. 8** are advantageously caused or performed by the processing circuitry **120**. The flow chart of **FIG. 8** shows a number of comparisons between the energy level **E₁₇** of the non-propulsion battery **17** and the different thresholds **Tₘᵢₙ**, **T₁**, **T₂** introduced with reference to **FIG. 5**. The order of the comparisons of **FIG. 8** is exemplary and should not be considered limiting. The skilled person will understand, after digesting the teachings of the present disclosure, how to reconfigure the order of the comparisons.

In **FIG. 8**, the energy level **E₁₇** of the non-propulsion battery **17** is compared to the first threshold **T₁**. If the energy level **E₁₇** of the non-propulsion battery **17** is below the first threshold **T₁**, the energy recovery system **100** is operating at the first region of operation **(i)** or the fourth region of operation **(iv)**. To determine with of the first region of operation **(i)** or the fourth region of operation **(iv)** the energy recovery system **100** is operating at, the energy level **E₁₇** of the non-propulsion battery **17** is compared to the minimum threshold **Tₘᵢₙ**. If the energy level **E₁₇** of the non-propulsion battery **17** is below the minimum threshold **Tₘᵢₙ**, the energy recovery system **100** is operating at the fourth region of operation **(iv)**, corresponding to feature **231** forced charge of non-propulsion battery, prevent driving of KERS in **FIG. 7**. If the energy level **E₁₇** of the non-propulsion battery **17** is above the minimum threshold **Tₘᵢₙ**, the energy recovery system **100** is operating at the first region of operation **(i)**, corresponding to feature **232** charge non-propulsion battery, prevent driving of KERS in **FIG. 7**.

If the energy level **E₁₇** of the non-propulsion battery **17** is above the first threshold **T₁**, the energy recovery system **100** is operating at the second region of operation **(ii)** or the third region of operation **(iii)**. To determine with of the second region of operation **(ii)** or the third region of operation **(iii)** the energy recovery system **100** is operating at, the energy level **E₁₇** of the non-propulsion battery **17** is compared to the second threshold **T₂**. If the energy level **E₁₇** of the non-propulsion battery **17** is below the second threshold **T₂**, the energy recovery system **100** is operating at the second region of operation **(ii)**. At the second region of operation **(ii)**, energy of the energy storage device **130** may be distributed to both the non-propulsion battery **17** and the KERS **110**. In order to determine if energy **E** is to be distributed to the KERS **110** or not, the acceleration indicator **a** may be utilized. If the acceleration indicator **a** is negative, the energy recovery system **100** is configured to distribute energy **E** to the non-propulsion battery **17** and to prevent distribution of energy **E** to the KERS **110**, compare to feature **233**b charge non-propulsion battery, prevent driving KERS of **FIG. 7**. If the acceleration indicator **a** is positive, the energy recovery system **100** is configured to distribute energy **E** to the non-propulsion battery **17** and to the KERS **110**, compare to feature **233**a charge non-propulsion battery, drive KERS of **FIG. 7**.

If the energy level **E₁₇** of the non-propulsion battery **17** is above the second threshold **T₂**, the energy recovery system **100** is operating at the third region of operation (iii). In order to determine if energy **E** is to be distributed to the KERS **110**, the acceleration indicator **a** may be utilized. If the acceleration indicator **a** is positive, the energy recovery system **100** is configured to distribute energy **E** to the KERS **110**, compare to feature **235** prevent charging of non-propulson battery, drive KERS of **FIG. 7**. If the acceleration indicator **a** is negative, the energy recovery system **100** may configured to store energy **E** in the energy storage device **130**, i.e. not to distribute energy **E** to either of the KERS **110** or the non-propulsion battery **17**.

Optionally, if the last state occurs, i.e. the non-propulsion battery **17** is fully charged and there is no acceleration request, it may be that the energy storage device **130** is full or otherwise unable to hold more energy **E**. In order to prevent overcharging and/or voltage buildup, overcharging circuitry may be provided in the power control circuitry **140**. The overcharging circuitry may comprise a resistor or other suitable device arranged to dissipate energy recovered from the KERS **110** if no other device is in need of energy **E.**

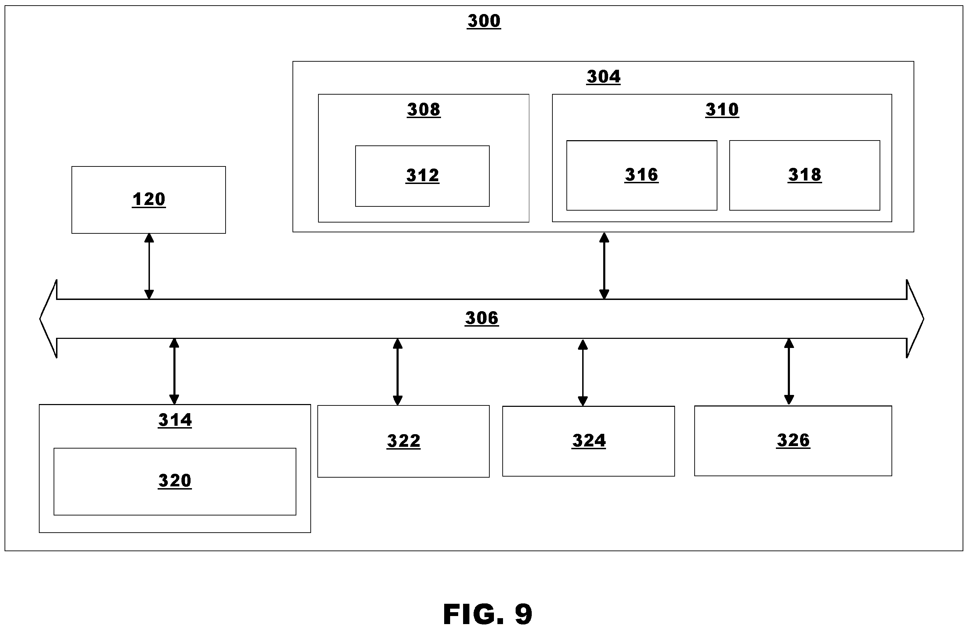

**FIG. 9** is a schematic diagram of a computer system **300** for implementing examples disclosed herein. The computer system **300** is adapted to execute instructions from a computer-readable medium to perform these and/or any of the functions or processing described herein. The computer system **300** may be connected (e.g., networked) to other machines in a LAN, an intranet, an extranet, or the Internet. While only a single device is illustrated, the computer system **300** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **300** may comprise at least one computing device or electronic device capable of including firmware, hardware, and/or executing software instructions to implement the functionality described herein. The computer system **300** may include processing circuitry **120** (e.g., processing circuitry including one or more processor devices or control units), a memory **304**, and a system bus **306**. The computer system **300** may include at least one computing device having the processing circuitry **120**. The system bus **306** provides an interface for system components including, but not limited to, the memory **304** and the processing circuitry **120**. The processing circuitry **120** may include any number of hardware components for conducting data or signal processing or for executing computer code stored in memory **304**. The processing circuitry **120** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **120** may further include computer executable code that controls operation of the programmable device.

The system bus **306** may be any of several types of bus structures that may further interconnect to a memory bus (with or without a memory controller), a peripheral bus, and/or a local bus using any of a variety of bus architectures. The memory **304** may be one or more devices for storing data and/or computer code for completing or facilitating methods described herein. The memory **304** may include database components, object code components, script components, or other types of information structure for supporting the various activities herein. Any distributed or local memory device may be utilized with the systems and methods of this description. The memory **304** may be communicably connected to the processing circuitry **120** (e.g., via a circuit or any other wired, wireless, or network connection) and may include computer code for executing one or more processes described herein. The memory **304** may include non-volatile memory **308** (e.g., read-only memory (ROM), erasable programmable read-only memory (EPROM), electrically erasable programmable read-only memory (EEPROM), etc.), and volatile memory **310** (e.g., randomaccess memory (RAM)), or any other medium which can be used to carry or store desired program code in the form of machine-executable instructions or data structures and which can be accessed by a computer or other machine with processing circuitry **120**. A basic input/output system (BIOS) **312** may be stored in the non-volatile memory **308** and can include the basic routines that help to transfer information between elements within the computer system **300**.

The computer system **300** may further include or be coupled to a non-transitory computer-readable storage medium such as the storage device **314**, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **314** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **314** and/or in the volatile memory **310**, which may include an operating system **316** and/or one or more program modules **318**. All or a portion of the examples disclosed herein may be implemented as a computer program **320** stored on a transitory or non-transitory computer-usable or computer-readable storage medium (e.g., single medium or multiple media), such as the storage device **314**, which includes complex programming instructions (e.g., complex computer-readable program code) to cause the processing circuitry **120** to carry out actions described herein. Thus, the computer-readable program code of the computer program **320** can comprise software instructions for implementing the functionality of the examples described herein when executed by the processing circuitry **120**. In some examples, the storage device **314** may be a computer program product (e.g., readable storage medium) storing the computer program **320** thereon, where at least a portion of a computer program **320** may be loadable (e.g., into a processor) for implementing the functionality of the examples described herein when executed by the processing circuitry **120**. The processing circuitry **120** may serve as a controller or control system for the computer system **300** that is to implement the functionality described herein.

The computer system **300** may include an input device interface **322** configured to receive input and selections to be communicated to the computer system **300** when executing instructions, such as from a keyboard, mouse, touch-sensitive surface, etc. Such input devices may be connected to the processing circuitry **120** through the input device
interface **322** coupled to the system bus **306** but can be connected through other interfaces, such as a parallel port, an Institute of **E**lectrical and **E**lectronic **E**ngineers (IEEE) **1394** serial port, a Universal Serial Bus (USB) port, an IR interface, and the like. The computer system **300** may include an output device interface **324** configured to forward output, such as to a display, a video display unit (e.g., a liquid crystal display (LCD) or a cathode ray tube (CRT)). The computer system **300** may include a communications interface **326** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

In the following, a list of examples are presented.

Example 1. An energy recovery system **100** for a vehicle **10**, the energy recovery system **100** comprises a Kinetic **E**nergy Recovery System, KERS, **110** for connecting to a propulsion shaft **14** of the vehicle **10**, an internal energy storage device **130** arranged to receive and store energy from the KERS **110**, and a processing circuitry **120** configured to cause distribution of energy **E** from the internal energy storage device **130** to the propulsion shaft **14** of the vehicle **10** and/or at least one non-propulsion battery **17** for the vehicle **10** based on an energy level **E₁₇** of the non-propulsion battery **17**.

Example 2. The energy recovery system **100** of example 1, wherein the processing circuitry **120** is further configured to cause distribution of energy **E** from the internal energy storage device **130** based on an acceleration indicator **11** obtained from the vehicle **10.**

Example 3. The energy recovery system **100** of example 2, wherein the processing circuitry **120** is configured to prevent distribution of energy **E** from the internal energy storage device **130** to the propulsion shaft **14** of the vehicle **10** responsive to the acceleration indicator **11** indicating a negative acceleration of the vehicle **10**.

Example 4. The energy recovery system **100** of any one of the preceding examples, wherein the internal energy storage device **130** is a super capacitor.

Example 5. The energy recovery system **100** of the preceding examples, wherein the processing circuitry **120** is further configured to cause distribution of energy **E** from the internal energy storage device **130** to the non-propulsion battery **17** and to prevent distribution of energy **E** from the internal energy storage device **130** to the propulsion shaft **14** of the vehicle **10** responsive to the energy level **E₁₇** of the non-propulsion battery **17** being below a first threshold **T₁**.

Example 6. The energy recovery system **100** of example 5, wherein the processing circuitry **120** is further configured to cause distribution of energy **E** from the internal energy storage device **130** to the propulsion shaft **14** of the vehicle **10** responsive to the energy level **E₁₇** of the non-propulsion battery **17** being above the first threshold **T₁**.

Example 7. The energy recovery system **100** of example 5 or 6, wherein the processing circuitry **120** is further configured to cause distribution of energy **E** from the internal energy storage device **130** to the propulsion shaft **14** of the vehicle **10** and to prevent distribution of energy **E** from the internal energy storage device **130** to the non-propulsion battery **17** responsive to the energy level **E₁₇** of the non-propulsion battery **17** being above a second threshold **T₂**, wherein the second threshold **T₂** is indicating a higher energy level **E₁₇** than the first threshold **T₁**.

Example 8. The energy recovery system **100** of example 6 or 7, wherein the processing circuitry **120** is further configured to cause distribution of energy **E** from the internal energy storage device **130** to the non-propulsion battery **17** and to the propulsion shaft **14** of the vehicle **10** responsive to the energy level **E₁₇** of the non-propulsion battery **17** being between the first and second thresholds.

Example 9. The energy recovery system **100** of any one of the preceding examples, wherein the processing circuitry **120** is further configured to provide a recuperation indication to the vehicle **10** indicating that the vehicle **10** is to operate at an enforced energy recuperation mode.

Example 10. The energy recovery system **100** of example 5 and 9, wherein the processing circuitry **120** is configured to provide the recuperation indication to the vehicle **10** responsive to the energy level **E₁₇** of the non-propulsion battery **17** being below a minimum threshold **Tₘᵢₙ**, wherein the minimum threshold **Tₘᵢₙ** is below the first threshold **T₁**.

Example 11. The energy recovery system **100** of any one of the preceding examples, further comprising the at least one non-propulsion battery **17**.

Example 12. The energy recovery system **100** of example 11, further comprising at least two non-propulsion batteries **17**, wherein a first non-propulsion battery **17** is configured for providing power to vehicle propulsion control and a second non-propulsion battery **17** is configured for providing power to vehicle comfort control.

Example 13. The energy recovery system **100** of example 11 or 12, wherein at least one non-propulsion battery **17** is a battery configured with a nominal voltage below 30 V.

Example 14. The energy recovery system **100** of any one of the preceding examples, wherein the KERS **110** comprises an electrical motor **112**.

Example 15. The energy recovery system **100** of example 14, wherein the KERS 110 comprises a flywheel arrangement **114**.

Example 16. The energy recovery system **100** of example 1, wherein the processing circuitry **120** is further configured to cause distribution of energy **E** based on an acceleration indicator **11** obtained from the vehicle **10** and to prevent distribution of energy **E** to the propulsion shaft **14** of the vehicle **10** responsive to the acceleration indicator **11** indicating negative acceleration of the vehicle **10**; the internal energy storage device **130** is a super capacitor; the processing circuitry **120** is further configured to cause distribution of energy **E** of the internal energy storage device **130** to the non-propulsion battery **17** and to prevent distribution of energy **E** of the internal energy storage device **130** to the propulsion shaft **14** of the vehicle **10** responsive to the energy level **E₁₇** of the non-propulsion battery **17** being below a first threshold **T₁**, and to cause distribution of energy **E** of the internal energy storage device **130** to the propulsion shaft **14** of the vehicle **10** responsive to the energy level **E₁₇** of the non-propulsion battery **17** being above the first threshold **T₁**; the processing circuitry **120** is further configured to cause distribution of energy **E** of the internal energy storage device **130** to the propulsion shaft **14** of the vehicle **10** and to prevent distribution of energy **E** of the internal energy storage device **130** to the non-propulsion battery **17** of the vehicle **10** responsive to the energy level **E₁₇** of the non-propulsion battery **17** being above a second threshold **T₂**, wherein the second threshold **T₂** indicating a higher energy level **E₁₇** than the first threshold **T₁**, and to cause distribution of energy **E** of the internal energy storage device **130** to the non-propulsion battery **17** and to the propulsion shaft **14** of the vehicle **10** responsive to the energy level **E₁₇** of the non-propulsion battery **17** being between the first and second thresholds **T₁**, **T₂**; the processing circuitry **120** is further configured to provide a recuperation indication to the vehicle **10** indicating that the vehicle **10** is to operate at an enforced energy recuperation mode, and to provide the recuperation indication to the vehicle **10** responsive to the energy level **E₁₇** of the non-propulsion battery **17** being below a minimum threshold **Tₘᵢₙ**, wherein the minimum threshold **Tₘᵢₙ** is below the first threshold **T₁**; the energy recovery system **100** further comprising at least two non-propulsion battery **17**, wherein a first non-propulsion battery **17** is configured for providing power to vehicle propulsion control and a second non-propulsion battery **17** is configured for providing power to vehicle comfort control, at least one non-propulsion battery **17** is a battery configured with a nominal voltage below **30** V; the KERS **110** comprises an electrical motor **112** and a flywheel arrangement **114**.

Example **17**. A vehicle **10** comprising a non-propulsion battery **17** for providing power to the vehicle **10**, a propulsion shaft **14**, a propulsion motor **12** coupled to the propulsion shaft **14**, and an energy recovery system **100** of any one of the preceding examples connected to the propulsion shaft **14**.

Example 18. The vehicle **10** of example **17**, wherein a controllable disconnect **13** is provided between the propulsion motor **12** and the propulsion shaft **14**, wherein the KERS **110** is connected to the propulsion shaft **14** downstream from the propulsion motor and the controllable disconnect **13**.

Example 19. The vehicle **10** of example 18, further comprising a vehicle processing circuitry **120** configured to cause the controllable disconnect **13** to disconnect the propulsion motor **12** from the propulsion shaft **14** responsive to obtaining a recuperation indication indicating that the vehicle **10** is to operate at an enforced energy recuperation mode.

Example 20. The vehicle **10** of any one of examples 17 to 19, wherein the vehicle is a heavy-duty vehicles, such as a truck, a bus, or a construction equipment.

Example 21. A method **200** of distributing energy of an internal energy storage device **130** of an energy recovery system **100** according to any one of examples **1** to **16** when comprised in a vehicle **10**, the method **200** comprising: obtaining **210** an energy level **E₁₇** of a non-propulsion battery **17** connected to the energy recovery system **100**, and distributing **230** energy **E** from the internal energy storage device **130** to a propulsion shaft **14** of the vehicle **10** and/or to the non-propulsion battery **17** based on the energy level **E₁₇** of the non-propulsion battery **17**.

Example 22. The method of example 21, further comprising: obtaining **220** an acceleration indicator **a** from the vehicle **10**, wherein the distribution of energy **E** from the internal energy storage device **130** is further based on an acceleration indicator **a** obtained from the vehicle **10**.

Example 23. The method **200** of example 22, further comprising: preventing **235** distribution of energy **E** from the internal energy storage device **130** to the propulsion shaft **14** of the vehicle **10** responsive to the acceleration indicator **a** indicating a negative acceleration of the vehicle **10**.

Example 24. The method **200** of any one of examples 21 to 23, wherein distributing **230** energy **E** from the internal energy storage device **130** comprises distributing **231, 232** energy **E** from the internal energy storage device **130** to the non-propulsion battery **17** and to prevent distribution of energy **E** from the internal energy storage device **130** to the propulsion shaft **14** of the vehicle **10** responsive to the energy level **E₁₇** of the non-propulsion battery **17** being below a first threshold **T₁**.

Example 25. The method of example 24, wherein distributing **230** energy **E** from the internal energy storage device **130** further comprises distributing **233, 234** energy **E** from the internal energy storage device **130** to the propulsion shaft **14** of the vehicle **10** responsive to the energy level **E₁₇** of the non-propulsion battery **17** being above the first threshold **T₁**.

Example 26. The method **200** of example 24 or 25, further comprising, responsive to the energy level **E₁₇** of the non-propulsion battery **17** being above a second threshold **T₂** indicating a higher energy level **E₁₇** than the first threshold **T₁**: distributing **230** energy **E** from the internal energy storage device **130** to the propulsion shaft **14** of the vehicle **10**, and preventing **235** distribution of energy **E** from the internal energy storage device **130** to the propulsion shaft **14** of the vehicle **10**.

Example 27. The method **200** of example 25 or 26, wherein distributing **230** energy **E** from the internal energy storage device **130** further comprises distributing **233**a energy **E** from the internal energy storage device **130** to the non-propulsion battery **17** and to the propulsion shaft **14** of the vehicle **10** responsive to the energy level **E₁₇** of the non-propulsion battery **17** being between the first and second thresholds **T₁**, **T₂.**

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An energy recovery system (100) for a vehicle (10), the energy recovery system (100) comprises a Kinetic Energy Recovery System, KERS, (110) for connecting to a propulsion shaft (14) of the vehicle (10), an internal energy storage device (130) configured to receive and store energy from the KERS (110), and a processing circuitry (120) configured to cause distribution of energy (E) from the internal energy storage device (130) to the propulsion shaft (14) of the vehicle (10) and/or at least one non-propulsion battery (17) for the vehicle (10) based on an energy level (E₁₇) of the non-propulsion battery (17).

2. The energy recovery system (100) of claim 1, wherein the processing circuitry (120) is further configured to cause distribution of energy (E) from the internal energy storage device (130) based on an acceleration indicator (a) obtained from the vehicle (10).

3. The energy recovery system (100) of claim 2, wherein the processing circuitry (120) is configured to prevent distribution of energy (E) from the internal energy storage device (130) to the propulsion shaft (14) of the vehicle (10) responsive to the acceleration indicator (a) indicating a negative acceleration of the vehicle (10).

4. The energy recovery system (100) of any of claims 1 to 3, wherein the internal energy storage device (130) is a super capacitor.

5. The energy recovery system (100) of the any of claims 1 to 4, wherein the processing circuitry (120) is further configured to cause distribution of energy (E) from the internal energy storage device (130) to the non-propulsion battery (17) and to prevent distribution of energy (E) from the internal energy storage device (130) to the propulsion shaft (14) of the vehicle (10) responsive to the energy level (E₁₇) of the non-propulsion battery (17) being below a first threshold (Ti); preferably the processing circuitry (120) is further configured to cause distribution of energy (E) from the internal energy storage device (130) to the propulsion shaft (14) of the vehicle (10) responsive to the energy level (E₁₇) of the non-propulsion battery (17) being above the first threshold (Ti); more preferably the processing circuitry (120) is further configured to cause distribution of energy (E) from the internal energy storage device (130) to the propulsion shaft (14) of the vehicle (10) and to prevent distribution of energy (E) from the internal energy storage device (130) to the non-propulsion battery (17) responsive to the energy level (E₁₇) of the non-propulsion battery (17) being above a second threshold (T₂), wherein the second threshold (T₂) is indicating a higher energy level (E₁₇) than the first threshold (Ti); most preferably the processing circuitry (120) is further configured to cause distribution of energy (E) from the internal energy storage device (130) to the non-propulsion battery (17) and to the propulsion shaft (14) of the vehicle (10) responsive to the energy level (E₁₇) of the non-propulsion battery (17) being between the first and second thresholds.

6. The energy recovery system (100) of any of claims 1 to 5, wherein the processing circuitry (120) is further configured to provide a recuperation indication to the vehicle (10) indicating that the vehicle (10) is to operate at an enforced energy recuperation mode.

7. The energy recovery system (100) of claim 5 and 6, wherein the processing circuitry (120) is configured to provide the recuperation indication to the vehicle (10) responsive to the energy level (E₁₇) of the non-propulsion battery (17) being below a minimum threshold (Tₘᵢₙ), wherein the minimum threshold (Tₘᵢₙ) is below the first threshold (Ti).

8. The energy recovery system (100) of any of claims 1 to 7, further comprising the at least one non-propulsion battery (17).

9. The energy recovery system (100) of claim 8, further comprising at least two non-propulsion batteries (17), wherein a first non-propulsion battery (17) is configured for providing power to vehicle propulsion support functions and a second non-propulsion battery (17) is configured for providing power to vehicle comfort control; preferably at least one non-propulsion battery (17) is a battery configured with a nominal voltage below 30 V.

10. The energy recovery system (100) of any of claims 1 to 9, wherein the KERS (110) comprises an electrical motor (112); preferably, the KERS (110) further comprises a flywheel arrangement (114).

11. A vehicle (10) comprising a non-propulsion battery (17) for providing power to the vehicle (10), a propulsion shaft (14), a propulsion source (12) coupled to the propulsion shaft (14), and an energy recovery system (100) of any one of the preceding claims connected to the propulsion shaft (14).

12. The vehicle (10) of claim 11, wherein the propulsion source (12) is selectively connected to the propulsion shaft (14) by a controllable disconnect (13), the KERS (110) is connected to the propulsion shaft (14) downstream from the propulsion source (12) and the controllable disconnect (13); preferably, the vehicle (10) further comprises a vehicle processing circuitry (11) configured to cause the controllable disconnect (13) to disconnect the propulsion source (12) from the propulsion shaft (14) responsive to obtaining a recuperation indication () indicating that the vehicle (10) is to operate at an enforced energy recuperation mode.

13. A method (200) of distributing energy of an internal energy storage device (130) of an energy recovery system (100) according to any one of claims 1 to 10 when comprised in a vehicle (10), the method (200) comprising:
obtaining (210) an energy level (E₁₇) of a non-propulsion battery (17) connected to the energy recovery system (100), and
distributing (230) energy (E) from the internal energy storage device (130) to a propulsion shaft (14) of the vehicle (10) and/or to the non-propulsion battery (17) based on the energy level (E₁₇) of the non-propulsion battery (17).

14. The method (200) of claim 13, wherein distributing (230) energy (E) from the internal energy storage device (130) comprises distributing (231, 232) energy (E) from the internal energy storage device (130) to the non-propulsion battery (17) and to prevent distribution of energy (E) from the internal energy storage device (130) to the propulsion shaft (14) of the vehicle (10) responsive to the energy level (E₁₇) of the non-propulsion battery (17) being below a first threshold (Ti); preferably, distributing (230) energy (E) from the internal energy storage device (130) further comprises distributing (233, 234) energy (E) from the internal energy storage device (130) to the propulsion shaft (14) of the vehicle (10) responsive to the energy level (E₁₇) of the non-propulsion battery (17) being above the first threshold (Ti).

15. The method (200) of claim 14, further comprising, responsive to the energy level (E₁₇) of the non-propulsion battery (17) being above a second threshold (T₂) indicating a higher energy level (E₁₇) than the first threshold (Ti):
distributing (230) energy (E) from the internal energy storage device (130) to the propulsion shaft (14) of the vehicle (10), and
preventing (235) distribution of energy (E) from the internal energy storage device (130) to the propulsion shaft (14) of the vehicle (10);
preferably, distributing (230) energy (E) from the internal energy storage device (130) further comprises distributing (233a) energy (E) from the internal energy storage device (130) to the non-propulsion battery (17) and to the propulsion shaft (14) of the vehicle (10) responsive to the energy level (E₁₇) of the non-propulsion battery (17) being between the first and second thresholds (T₁, T₂).
